# EUROPEAN PATENT SPECIFICATION

(11) **EP 3 336 950 B1**
(45) Date of publication and mention of the grant of the patent: **24.03.2021**
(21) Application number: 17197429.8
(22) Date of filing: 20.10.2017
(51) Int. Cl.: H01M 10/04, H01M 10/12, H01M 10/14

(54) **A METHOD FOR CONNECTING A GROUP OF ELECTRODE PLATES OF A LEAD-ACID BATTERY, A METHOD FOR MANUFACTURING A LEAD-ACID BATTERY, A LEAD-ACID BATTERY MANUFACTURED BY THE METHOD, AND A DEVICE FOR CONNECTING A GROUP OF ELECTRODE PLATES OF A LEAD-ACID BATTERY**
VERFAHREN ZUM VERBINDEN EINER GRUPPE VON ELEKTRODENPLATTEN EINER BLEI-SÄURE-BATTERIE, VERFAHREN ZUR HERSTELLUNG EINER BLEI-SÄURE-BATTERIE, MIT DEM VERFAHREN HERGESTELLTE BLEI-SÄURE-BATTERIE UND VORRICHTUNG ZUM VERBINDEN EINER GRUPPE VON ELEKTRODENPLATTEN EINER BLEI-SÄURE-BATTERIE
PROCÉDÉ POUR CONNECTER UN GROUPE DE PLAQUES D'ÉLECTRODES D'UNE BATTERIE AU PLOMB-ACIDE, PROCÉDÉ DE FABRICATION D'UNE BATTERIE AU PLOMB-ACIDE, BATTERIE AU PLOMB-ACIDE FABRIQUÉE SELON CE PROCÉDÉ ET DISPOSITIF POUR CONNECTER UN GROUPE DE PLAQUES D'ÉLECTRODES D'UNE BATTERIE AU PLOMB-ACIDE

(30) Priority: 14.12.2016 KR 20160170261
(43) Date of publication of application: 20.06.2018
(73) Proprietor: GS Yuasa International Ltd., Kisshoin, Minami-ku, Kyoto-shi, Kyoto 601-8520 (JP)
(72) Inventor: NAGATA, Gaku, Kyoto, 601-8520 (JP)
(74) Representative: Isarpatent

(56) References cited:
- CN-U- 204 577 534
- JP-A- H 056 761
- JP-A- H05 335 009
- US-A1- 2014 304 983

## Description

### [TECHNICAL FIELD]

The present invention relates to a method for manufacturing a strap of a group of electrode plates of a lead-acid battery and a method for manufacturing a lead-acid battery.

### [BACKGROUND ART]

A lead-acid battery includes a plurality of groups of electrode plates in which positive electrode plates and negative electrode plates are laminated alternatively, interposing a separator therebetween. The plurality of the groups of electrode plates are respectively stored into a plurality of cells of a container. In each of the groups of electrode plates, lugs of the electrode plates having the same polarity are joined to a strap. The groups of electrode plates stored in the respective cells are linked through the strap and are electrically connected to each other in series.

In order to form the strap for connecting the groups of electrode plates to one another, the method of casting a melting liquid of lead or lead alloy and solidifying the melting liquid is commonly used. More specifically, the strap is formed by putting a lead alloy melting liquid into a mold for casting and then congealing the melting liquid in the state where lugs of the group of electrode plates are inserted into the melting liquid. Thereby, the lugs of the electrode plates are joined to the strap.

For example, US Patent Publication No. 2007-0266553 A1 (Patent Document 1) discloses an apparatus for connecting lugs of electrode plates using a bridge (corresponding to the strap of the present invention). In this apparatus, the strap is formed by loading a group of electrode plates in a cassette, aligning the group of electrode plates and lugs in the cassette, rotating the cassette so as to place the lugs of electrode plates downwardly, brushing the lugs, and then coating the lugs with flux, and putting the lugs into a lead alloy melting liquid of the mold. JP H05 6761 A (PATENT DOCUMENT 2) relates to a lead-acid battery with little self discharge.

### [CITATION LIST]

### [PATENT DOCUMENT]

(PATENT DOCUMENT 1) US Patent Publication No. 2007-0266553 A1
(PATENT DOCUMENT 2) JP Patent Publication JP H05 6761 A

### [DETAILED DESCRIPTION OF THE INVENTION]

### [TECHNICAL TASK]

However, in the apparatus disclosed in Patent Document 1, yield is low because, in many cases, a deviation of dimension from the top of the strap to the bottom of the group of electrode plates is large so the dimension deviates from the standard range.

The object of the present invention is to make a deviation of dimension small so as to improve yield, in consideration of the aforementioned conventional problem.

### [MEANS FOR SOLVING THE TASK]

The invention is defined by the appended claims. The characteristic feature of a method for connecting a group of electrode plates of a lead-acid battery in order to solve the problem lies in comprising an alignment process for aligning the group of electrode plates placed; a cutting process for maintaining the group of electrode plates aligned by the alignment process, and cutting the distal ends of lugs of the group of electrode plates; and a strap forming process for immersing, while maintaining the group of electrode plates after the cutting process, the lugs of the group of electrode plates into a melting liquid of lead or lead alloy, thereby forming a strap.

In the method for connecting a group of electrode plates of a lead-acid battery, in the cutting process, the distal ends of the lugs of the maintained group of electrode plates having the same polarity are cut to be at the same height.

In the method for connecting a group of electrode plates of a lead-acid battery, it is preferable that in the cutting process, the distal ends of the lugs of the group of electrode plates are cut while placing the lugs of the maintained group of electrode plates downwardly, and in the strap forming process, the lugs of the group of electrode plates, which were placed downwardly in the cutting process, are immersed into a melting liquid of lead or lead alloy filled in a mold that is opened upwardly, thereby forming a strap.

In the method for connecting a group of electrode plates of a lead-acid battery, it is preferable that in the cutting process and the strap forming process, the plurality of the groups of electrode plates are arranged with spaces so that each group of electrode plates is maintained respectively.

In the method for connecting a group of electrode plates of a lead-acid battery, it is preferable that in the cutting process, a plurality of the groups of electrode plates having the same polarity is cut by an end mill.

Disclosed is also a device for connecting a group of electrode plates of a lead-acid battery comprising an alignment means for aligning the group of electrode plates placed; a cutting means for maintaining the group of electrode plates aligned by the alignment means, and cutting the distal ends of lugs of the group of electrode plates; and a strap forming means for immersing, while maintaining the group of electrode plates cut by the cutting means, the lugs of the group of electrode plates into a melting liquid of lead or lead alloy, thereby forming a strap.

In the device for connecting a group of electrode plates of a lead-acid battery, the distal ends of lugs of the maintained group of electrode plates having the same polarity may be cut to be at the same height, by the cutting means.

In the device for connecting a group of electrode plates of a lead-acid battery, the cutting means may cut the lugs of the group of electrode plates while placing the lugs of the maintained group of electrode plates downwardly, and the strap forming means immerses the lugs of the group of electrode plates, which were placed downwardly by the cutting means, into a melting liquid of lead or lead alloy filled in a mold that is opened upwardly, thereby forming a strap.

In the device for connecting a group of electrode plates of a lead-acid battery, the lead-acid battery may have a plurality of the groups of electrode plates, and the cutting means and the strap forming means may have a maintaining frame that arranges the plurality of the groups of electrode plates with spaces so that each group of electrode plates is maintained respectively.

In the device for connecting a group of electrode plates of a lead-acid battery, the cutting means may have an end mill, and the end mill may cut the plurality of the groups of electrode plates having the same polarity.

In the device for connecting a group of electrode plates of a lead-acid battery, the alignment means may align the group of electrode plates, which comprises an expanded grid.

In the device for connecting a group of electrode plates of a lead-acid battery, the alignment means may align the group of the electrode plates wherein a length of the electrode plate excluding a length of the lug, is 100 mm or more.

### [EFFECT OF THE INVENTION]

The present invention makes a deviation of dimension from the top of the strap to the bottom of the group of electrode plates small, thereby improving its yield.

### [BRIEF DESCRIPTION OF THE DRAWINGS]

Figure 1 is a perspective view showing the entire structure of a lead-acid battery.
Figure 2 is a front view of electrode plates of a lead-acid battery for vehicles.
Figure 3 is a schematic diagram of a COS device.
Figure 4 is an entire flowchart of the present embodiment.
Figure 5 is a front view showing that the alignment process is carried out.
Figure 5a is a side view showing that the alignment process is carried out.
Figure 5b is a detailed flowchart of the alignment process.
Figure 6 is a front view showing that the cutting process is carried out.
Figure 6a is a side view showing that the cutting process is carried out.
Figure 6b is a detailed flowchart of the cutting process.
Figure 7 is a front view showing that a flux coating is carried out.
Figure 7a is a detailed flowchart of the flux coating process.
Figure 8 is a front view showing that the strap forming process is carried out.
Figure 8a is a detailed flowchart of the strap forming process.
Figure 9 is a drawing comparing the cross sections of the molded straps cut in a direction perpendicular to each of the groups of electrode plates, in the present embodiment and the conventional technology.
Figure 10 is a photograph showing the cross section of the molded strap cut in a direction perpendicular to each of the groups of electrode plates, in the conventional technology.
Figure 11 is a photograph showing the cross section of the molded strap cut in a direction perpendicular to each of the groups of electrode plates, in the present embodiment.

### [DETAILED DESCRIPTION FOR CARRYING OUT THE INVENTION]

Hereinafter, the embodiments of the present invention will be explained with reference to the drawings. In addition, all of the embodiments explained below represent comprehensive or detailed examples. The numerical values, shapes, materials, components, arrangement, position and connection form of the components, etc. shown in the following embodiments are just examples, and the present invention is not limited thereto. In addition, among the components of the following embodiments, the components that are not described in the independent claims representing the most subordinate concept are explained as optional components.

First, the lead-acid battery will be briefly explained. The present embodiment will be explained using a liquid-type lead-acid battery for vehicles as an example.

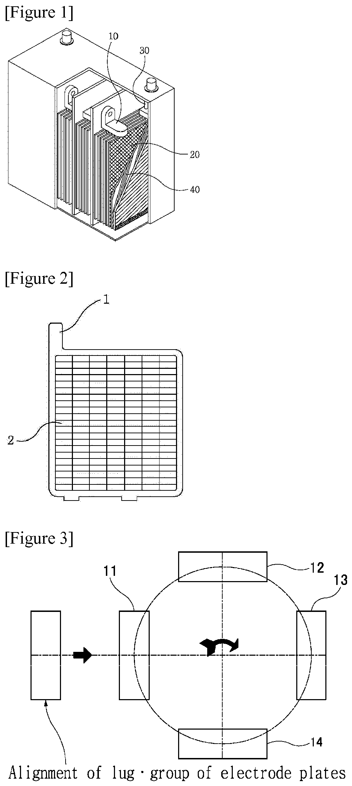

As illustrated in Figure 1, the lead-acid battery includes a plurality of groups of electrode plates (20) in which positive electrode plates and negative electrode plates are laminated alternatively, interposing a separator (40) therebetween. The plurality of the groups of electrode plates (20) is respectively stored into a plurality of cells of a container. As illustrated in Figures 1 and 2, in each of the groups of electrode plates (20), lugs (1) of the electrode plates (2) having the same polarity are joined to a strap (10). The groups of electrode plates (20) stored in the respective cells are linked through the strap (10) and are electrically connected in series. The separator (40) is in the shape of a sheet made from polyethylene, etc. In the container, an electrolyte is filled at a higher position than the height of the group of electrode plates.

As illustrated in Figure 3, a COS (cast on strap) device, which is a device for connecting a group of electrode plates (20) of a lead-acid battery, includes a first station (11) for carrying out a cutting process after aligning electrode plates; a second station (12) for carrying out a flux coating process; a third station (13) for carrying out a strap forming process; and a fourth station (14) for taking out the group of electrode plates on which a strap is formed. The movement from one station to another station is performed by a known transfer means such as, for example, a rotating arm, etc. The following explanation on the COS device and process will be made using a case of manufacturing a lead-acid battery for vehicles as an example.

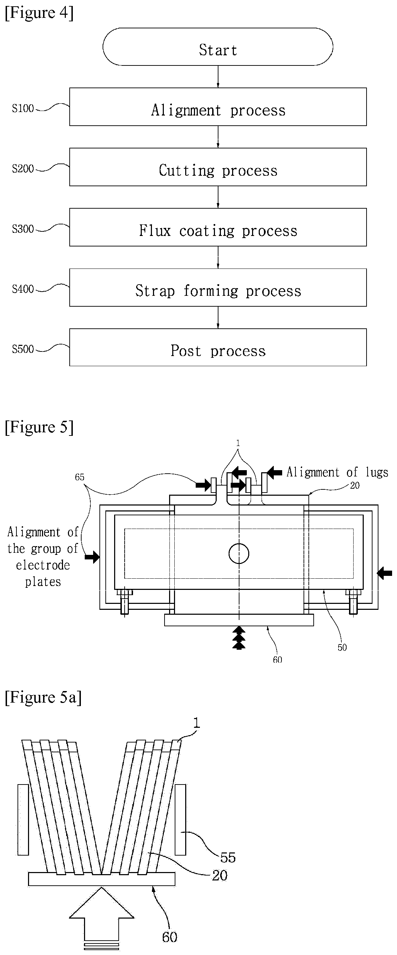

Figure 4 is a flowchart showing the entire process of the present embodiment. The method for connecting a group of electrode plates of a lead-acid battery according to the present embodiment comprises an alignment process (S100) of the group of electrode plates; a cutting process (S200) of lugs of the electrode plates; a flux coating process (S300); and a strap forming process (S400). In the entire process of the manufacture of the lead-acid battery, after the strap is completed by the strap forming process (S400), the groups of electrode plates are stored into the container (storage process), and the straps of the groups of electrode plates are linked through a hole in the wall of the container (linkage process). After then, the method comprises the post process (S500) wherein the opening of the container is covered with a lid and the container is sealed with the lid by heat-depositing the container and the lid (seal process), and an electrolyte is injected to a higher position than the height of the group of electrode plates in the container (liquid injection process).

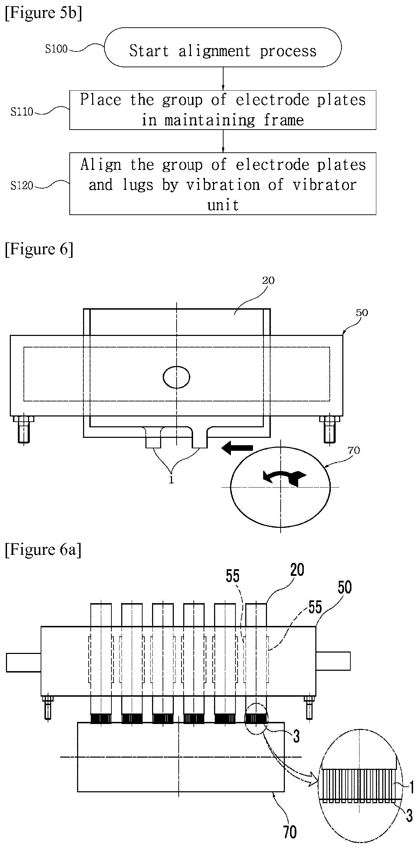

Figure 5 is a front view showing that the alignment process is being carried out; Figure 5a is a side view showing that the alignment process is being carried out; and Figure 5b is a detailed flowchart of the alignment process. First, a plurality of electrode plates is placed in a maintaining frame (S110 of Figures 5 and 5b). The station for aligning the electrode plates comprises a vibrator plate (60) that vibrates the electrode plates by a vibrator means (vibrator unit) by electric motion or air pressure at the bottom portion; and a support member (65) that adjusts the plurality of the laminated electrode plates evenly at both sides of the width direction. The group of electrode plates (20) and the lugs (1) placed in the vibrator plate (60) are aligned by the support member (65), in a state of being vibrated by the vibrator unit (S120 of Figures 5 and 5b). As illustrated in the side view of Figure 5a, since the alignment process is carried out by the vibration of the vibrator plate (60) in a state where a clamp plate (55) of the maintaining frame is opened so that the group of electrode plates (20) reclines on the clamp plate (55), the alignment is performed as each electrode plate is lightly bumped against or reclines on another electrode plates from the both-side directions, and even after the alignment, the group of electrode plates (20) continuously remains in the maintaining frame. After the alignment process, by closing the clamp plate (55) of the maintaining frame, the group of electrode plates (20) is inserted and maintained between the clamp plates (55) from the both sides of the laminated direction in the aligned state. In the maintaining frame, the group of electrode plates (20) is arranged with space so that each group of electrode plates (20) is maintained on the clamp plate (55).

According to the present embodiment, since each group of electrode plates of the liquid-type lead-acid battery is maintained, the pressure applied on the electrode plates is lower compared to the case of clamping together the plurality of groups of electrode plates, and as a result, passing through the separator between the positive electrode plates and the negative electrode plates, and shortage of the positive electrodes and negative electrodes can be prevented. In addition, by maintaining each group of electrode plates, dislocation when forming the strap is reduced, so that the strap can be welded in a predetermined position of all of groups of electrode plates of the liquid-type lead-acid battery.

In addition, in the present embodiment, the maintaining frame, the clamp plate (55), the vibrator plate (60) and the support member (65) correspond to the alignment means of the present invention.

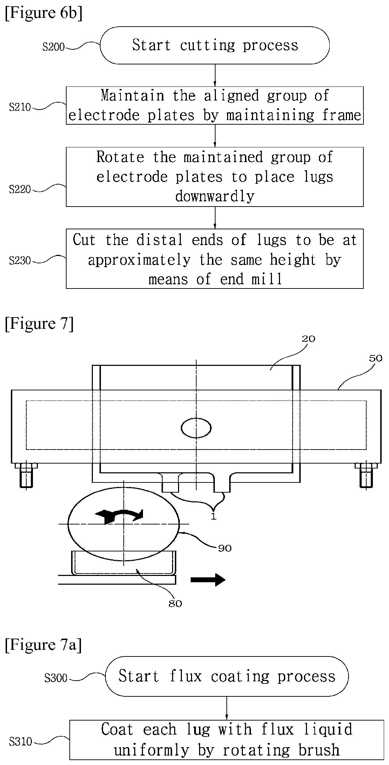

Figure 6 is a front view showing that the cutting process is being carried out; Figure 6a is a side view showing that the cutting process is being carried out; and Figure 6b is a detailed flowchart of the cutting process. The cutting process is carried out at the first station (11). The group of electrode plates aligned in the station for aligning the electrode plates is maintained by the clamp plate (S210 of Figures 6, 6a and 6b). By rotating the maintaining frame where the group of electrode plates maintained in the clamp plate is stored, the lugs (1) of the maintained group of electrode plates are placed downwardly (S220 of Figures 6, 6a and 6b).

The cutting means is an end mill (70) determined in consideration of wear resistance and hardness, etc. The end mill (70), which is a kind of a rotary cutter, is a cutter with a blade at its edge and being used for polishing a plane. This is a cutting tool commonly used in the milling process. The end mill (70) cuts the distal ends of all of the lugs (1) of the group of electrode plates as the end mill (70) moves from one side of the maintained group of electrode plates to the other side (the arrow direction of Figure 6).

In the maintained group of electrode plates, all lugs (1) of the electrode plates having the one specific polarity are cut at once at the same time, and with a slight time difference, all lugs (1) having the other polarity are cut at once at the same time. As a result, the heights of the lugs of all of the positive electrode plates, which belong to the same group of electrode plates, become approximately same after the cutting process. Also, the heights of the lugs of all of the negative electrode plates, which belong to the same group of electrode plates, become approximately same after the cutting process. The cut length can be determined in consideration of depth of oxide coating of a lug surface, and is preferably not less than 0.5 mm and not more than 3 mm. The dotted portion of circle of Figure 6a shows the magnified distal ends of the lugs of the group of electrode plates, and the portion (3) cut in the distal ends of the lugs is illustrated.

The cutting process removes oxide coating of the distal ends of the lugs (1), together with adjusting all of the lugs (1) of the electrode plates having the same polarity, which belong to the same group of electrode plates, to be at the same height.

In addition, in the present embodiment, the maintaining frame, the clamp plate (55) and the cutting tool (70) correspond to the cutting means of the present invention.

Figure 7 is a front view showing that a process of flux coating is being carried out; and Figure 7a is a detailed flowchart of the process of flux coating. The process of flux coating functions as improving dissolubility of a melting lead and a lug. Accordingly, by the flux coating process, the adhesion between the lugs of the group of electrode plates and the strap is improved.

In the flux coating process, the lugs (1) of the group of electrode plates are placed downwardly while the group of electrode plates is maintained in the clamp plate, and the lugs are coated with a flux liquid by a flux coating means arranged downwardly (S310 of Figures 7 and 7a). In one example of the present embodiment, the lugs (1) are coated with the flux liquid while using a rotating brush (90). The bottom of the brush is immersed into a flux bath (80), and the top of the brush is in contact with the lugs (1), so that the brush (90) holding the flux liquid continuously rotates and applies the flux liquid to the lugs (1). Since the flux liquid is reduced along with its use, in order to maintain the amount of coating constantly, in the flux bath (80), the flux liquid is always maintained at a constant height. In addition, by monitoring the brush (90) regularly, when wear of the brush occurs, the brush is replaced with a new brush to maintain the amount of coating of flux liquid constantly.

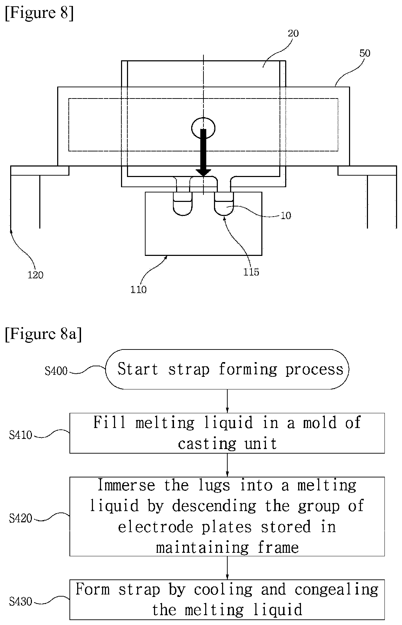

Figure 8 is a front view showing that the strap forming process is being carried out; and Figure 8a is a detailed flowchart of the strap forming process. This process is carried out at the strap forming station, and the strap forming station includes a casting unit (110) having a mold (115), and a lifter (120) for ascending and descending the maintaining frame where the group of electrode plates is stored. The melting liquid made of lead or lead alloy is filled in the mold (115) (S410 of Figures 8 and 8a). When a cavity is filled with the melting liquid at a constant amount, a pump blocks the supply of the melting liquid, and the melting liquid pumped up to the height beyond a bank is recovered, so that the height of the melting liquid is slightly lowered.

After the mold (115) is filled with the melting liquid, the maintaining frame (50) descends by the lifter (120) while storing the group of electrode plates (20) maintained by the clamp plate, so the lugs (1) are inserted into the mold (115) and immersed into the melting liquid filled in the mold (115), and when it is immersed up to the predetermined depth, by stopping descending of the lift, the insertion depth of the lugs (1) into the mold (115) is controlled (S420 of Figures 8 and 8a). Here, since the lugs (1) of the group of electrode plates (20) are cut to be at approximately the same height by the cutting process, even when the lugs are immersed into the melting liquid filled in the mold (115), all of the lugs are immersed at approximately the same height.

After the lugs (1) are immersed into the melting liquid, by congealing the filled lead melting liquid while cooling it, a strap (10) is casted in the lugs (1) of the maintained group of electrode plates (20) (S430 of Figures 8 and 8a). Generally, the cooling of the melting liquid is performed using cooling water, and a cooling water path is formed inside of the casting unit (110) having the mold (115), and as the cooling water is circulated along the path, the cooling process is performed. Here, by adjusting the temperature of the cooling water and the time at which the cooling water arrives at the individual mold (115), the hardness temperature and time of the lead melting liquid are adjusted.

When forming the strap (10), a mold for the positive electrode plates and a mold for the negative electrode plates are separately configured, and all lugs of the positive electrode plates are positioned at one side of the casting unit (110), and all lugs of the negative electrode plates are positioned at the other side of the casting unit (110), and the formation and congelation of the strap (10) are also individually performed in the group of positive electrode plates and the group of negative electrode plates, respectively. By casting the strap as such, the electrode plates of the group of electrode plates having the same polarity are electrically and mechanically joined to each other.

In addition, in the present embodiment, the maintaining frame, the clamp plate (55), the casting unit (110) and the mold (115) correspond to the strap forming means of the present invention.

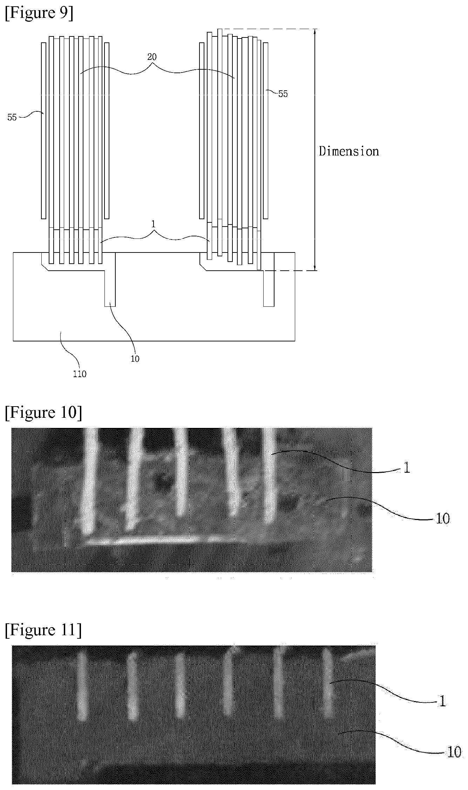

Figure 9 is a drawing comparing cross sections of a connection member formed according to the present embodiment and the conventional technology that does not comprise the cutting process. The strap formed at the left side is the result of the present embodiment, and the strap formed at the right side is the result of the conventional technology. As illustrated in the conventional technology at the right side of Figure 9, in the case of the connection member of the conventional technology, the depth of the lugs (1) immersed into the melting liquid is not constant, so there is a possibility that the lugs are exposed to the surface of the strap or that the length of a certain lug is longer than that of the other lug. In contrast, there is another possibility that the length of a lug is shorter than that of the other lug and the welded portion is thinner than that of the other lug.

On the other hand, in the case of the strap formed according to the present embodiment shown at the right side of Figure 9, in the cutting process, the distal ends of the lugs (1) of each of the group of electrode plates are cut to be at approximately the same height by the cutting tool such as an end mill, so the depth of the lugs immersed into the melting liquid is constant.

Figures 10 and 11 are photographs obtained by filming the strap formed according to the conventional technology and the strap formed according to the present embodiment illustrated in Figure 9. Figure 10 is a photograph obtained by filming the cross section of the strap, which is formed according to the conventional technology that does not comprise the cutting process and thereby welded in the state where the lengths of the lugs are different from each other. From this figure, it can be figured out that the welding state of each lug (1) is not uniform and the lengths of the welded lugs are different from each other. Figure 11 is a photograph obtained by filming the cross section of the lugs and strap welded through the cutting process of the present embodiment. Here, it is confirmed that the lugs were welded in the state where the length of each lug (1) is approximately the same.

Next, the result of measuring yields in the case of forming the straps using the COS device of the present embodiment and the COS device that does not comprise the cutting process is shown in Table 1. In determining the yields, if the dimension from the top of the strap (the lower portion in the figure) to the bottom of the group of electrode plates (the upper portion in the figure) illustrated in Figure 9 deviates from a predetermined standard value, it is determined to be a defective product having a faulty dimension. The predetermined standard value was set to be a dimension where the incidence of poor quality caused by the formation of the strap, such as the welding faulty of the lugs to the strap, the connection faulty between the straps, the modification of the strap, etc., is almost zero.

As shown in Table 1, in the COS device (Comparative Example) that does not comprise the cutting process, when straps are formed on 48 groups of electrode plates, 37 groups had faulty dimension, so its yield was 0.23. In contrast, in the COS device (Example) that comprises the cutting process, when straps are formed on 36 groups of electrode plates, 0 group had faulty dimension, so its yield was 1.

[Table 1]

| | Cutting process | Number | Faulty dimension | Yield |
|---|---|---|---|---|
| Example | Yes | 36 | 0 | 1 |
| Comparative Example | None | 48 | 37 | 0.23 |

From the above result, by forming the strap after cutting the distal ends of the lugs of the group of electrode plates while the aligned group of electrode plates is maintained, the heights of the lugs of the group of electrode plates joined to the strap become uniform, and a deviation of the dimension from the top of the strap to the bottom of the strap becomes smaller, and thereby the yield can be improved.

In addition, just before the strap forming process, by cutting the distal ends of the lugs of the group of electrode plates by the cutting process, the oxide coating of the distal ends of the lugs is removed, so that the adhesion between the lugs and the flux can be improved, and thereby the adhesion between the lugs and the strap can be improved. Furthermore, from the past, there has been a process for removing oxide coating of lugs; however, by carrying out the cutting process in the present embodiment, there is no need to separately carry out the process for removing oxide coating of lugs, which makes the process simplified.

Further, as in the present embodiment, in the case of cutting the distal ends of the lugs in the state of the group of electrode plates at the first station using the end mill, after aligning the electrode plates, the dimension deviation σ in 12 samples was 0.21. On the other hand, in the case of cutting the distal ends of the lugs in the state of the group of electrode plates where the alignment of the electrode plates was not carried out in the equipment at the previous step of the COS device, the dimension deviation σ in 12 samples was 0.38. In addition, in the case of cutting the distal ends of the lugs in the state of each of positive and negative electrode plates before forming the group of electrode plates, the dimension deviation σ in 12 samples was 0.5. As such, in the case of cutting the distal ends of the lugs in the state of the group of electrode plates at the first station, after aligning the electrode plates, the dimension deviation is smaller.

In case where electrode plates constituting the group of electrode plates include an expanded grid, when the aforementioned yield is measured, the difference in yield between the comparative example and the example is much larger, so the improvement in yield is more significant. The expanded grid is a mesh-like grid wherein a slit is formed and stretched on a rolled sheet made of lead alloy. Lugs of the expanded grid are connected to one side of a frame skeleton in the stretched direction. The expanded grid is likely to be expanded in the stretched direction because the upper and lower frame skeletons are formed at both sides of the stretched direction but a lengthwise frame skeleton along the stretched direction does not exist. Thus, it is likely to be expanded in the stretched direction at the previous process (for example, the process of laminating a plurality of electrode plates to form a group of electrode plates) of the alignment process in the present embodiment or when being maintained upon returning between the processes, and thus, a deviation in the dimension of the group of electrode groups is likely to be occurred. From the above, it is preferable to apply the present embodiment to a group of electrode plates including an expanded grid.

In addition, even in case where the length of the electrode plate, excluding a length of the lug of the electrode plate constituting the group of the electrode plates, is 100 mm or more, when the aforementioned yield is measured, the difference in yield between the comparative example and the example is much larger, so the improvement in yield is more significant. If the length of the electrode plate is longer such as 100 mm or more, it is likely to be expanded at the previous process (for example, the process of laminating a plurality of electrode plates to form a group of electrode plates) of the alignment process in the present embodiment or when being maintained upon returning between the processes, and thus, the deviation in the dimension of the group of electrode groups is likely to be occurred. From the above, it is preferable to apply the present embodiment to a group of electrode plates wherein a length of the electrode plate excluding a length of the lug, is 100 mm or more.

Furthermore, in case where the electrode plates constituting the group of the electrode plates are expanded grids and the length of the electrode plates is 100 mm or more, the condition under which the electrode plates are likely to be expanded overlaps, so it is very likely to be expanded. For this reason, when the aforementioned yield is measured, the difference in yield between the comparative example and the example is much larger compared to the group of electrode plates that does not comprise an expanded grid or to the group of electrode plates wherein a length of the electrode plate excluding a length of the lug, is 100 mm or more, so the improvement in yield is more significant. From the above, it is preferable to apply the present embodiment to a group of electrode plates that comprises an expanded grid and comprises the electrode plates wherein a length of the electrode plate is 100 mm or more.

### <Other embodiments>

The cutting tool in the present embodiment comprises cutting in addition to cutting the distal ends of lugs of the electrode plates; thus, the cutting tool is not limited to an end mill and may be a saw tooth, and the like.

In the present embodiment, the lugs are cut while placing the group of electrode plates downwardly; however, this is not limited to being downward, and the lugs can be cut in any direction.

The present embodiment has been explained using a lead-acid battery for vehicles as an example; however, the use thereof is not limited thereto. In addition, it is not limited to a liquid-type lead-acid battery, and can also be applied to a sealed-type lead-acid battery. For a grid of electrode plates comprised in a group of electrode plates, any grid such as a expanded grid, a casting grid, a grating grid, etc. can be used. Any length of electrode plates excluding the lugs can be used.

### [Description of Reference Numerals]

1: lug
2: electrode plates
10: strap
20: group of electrode plates
40: separator
50: maintaining frame
55: clamp plate
60: vibrator plate
65: support member
70: cutting tool
80: flux bath
90: rotating brush
110: casting unit
115: mold
120: lifter

## Claims

1. A method for manufacturing a strap (10) of a group of electrode plates (20) of a lead-acid battery, comprising:
an alignment process (S100) for aligning the group of electrode plates (20) placed;
**characterized by**
a cutting process (S200) for maintaining the group of electrode plates (20) aligned by the alignment process (S100), and cutting distal ends of the lugs (1) of the group of electrode plates (20); and
a strap forming process (S400) for immersing, while maintaining the group of electrode plates (20) after the cutting process (S200), the lugs (1) of the group of electrode plates (20) into a melting liquid of lead or lead alloy, thereby forming a strap (10), wherein the distal ends of the lugs (1) of the maintained group of electrode plates (20) having the same polarity are cut to be at the same height,
wherein the alignment process (S100), the cutting process (S200), and the strap forming process (S400) are carried out by a COS (cast on strap) device, and the COS device at least includes a first station (11) for carrying out the cutting process (S200) after the alignment process (S100) and a third station (13) for carrying out the strap forming process (S400).

2. The method according to claim 1, wherein
in the cutting process (S200),
the distal ends of lugs (1) of the group of electrode plates (20) are cut while the lugs (1) of the maintained group of electrode plates (20) are placed downwardly, and
in the strap forming process (S400), the strap (10) is formed by immersing the lugs (1) of the group of electrode plates (20) which were placed downwardly in the cutting process (S200), into a melting liquid of lead or lead alloy filled in a mold (115) that is opened upwardly.

3. The method according to claim 1, wherein
the lead-acid battery has a plurality of the groups of electrode plates (20), and
in the cutting process (S200) and the strap forming process (S400), the plurality of the groups of electrode plates (20) are arranged with spaces so that each group of electrode plates (20) is maintained respectively.

4. The method according to claim 3, wherein:
in the cutting process (S200), a plurality of the groups of electrode plates (20) having the same polarity are cut by an end mill (70).

5. A method for manufacturing a lead-acid battery, comprising:
a connection process comprising performing the method according to any one of claims 1 to 4;
a storage process for respectively storing a plurality of the groups of electrode plates (20) formed in the connection process, into a plurality of cells of a container;
a linkage process for linking the straps (10) of the groups of electrode plates (20) stored in the storage process;
a seal process for sealing the container with a lid, after the linkage process; and
a liquid injection process for injecting an electrolyte to a higher position than the height of the group of electrode plates (20) in the container, after the seal process.

## Patentansprüche

1. Verfahren zum Herstellen eines Bandes (10) einer Gruppe von Elektrodenplatten (20) einer Blei-Säure-Batterie, umfassend:
einen Ausrichtungsvorgang (S100) zum Ausrichten der platzierten Gruppe von Elektrodenplatten (20);
**gekennzeichnet durch**
einen Schneidevorgang (S200) zum Halten der durch den Ausrichtungsvorgang (S100) ausgerichteten Gruppe von Elektrodenplatten (20) und Schneiden von distalen Enden der Fahnen (1) der Gruppe von Elektrodenplatten (20); und
einen Bandbildungsvorgang (S400) zum Eintauchen, während die Gruppe von Elektrodenplatten (20) nach dem Schneidevorgang (S200) gehalten wird, der Fahnen (1) der Gruppe von Elektrodenplatten (20) in eine Schmelzflüssigkeit aus Blei oder einer Bleilegierung, wodurch ein Band (10) gebildet wird, wobei die distalen Enden der Fahnen (1) der gehaltenen Gruppe von Elektrodenplatten (20) mit der gleichen Polarität geschnitten werden, so dass sie die gleiche Höhe aufweisen,
wobei der Ausrichtungsvorgang (S100), der Schneidevorgang (S200) und der Bandbildungsvorgang (S400) durch eine COS-Vorrichtung (COS - *Cast On Strap)* ausgeführt werden und die COS-Vorrichtung mindestens eine erste Station (11) zum Ausführen des Schneidevorgangs (S200) nach dem Ausrichtungsvorgang (S100) und eine dritte Station (13) zum Ausführen des Bandbildungsvorgangs (S400 aufweist.

2. Verfahren nach Anspruch 1, bei dem
bei dem Schneidevorgang (S200)
die distalen Enden von Fahnen (1) der Gruppe von Elektrodenplatten (20) geschnitten werden, während die Fahnen (1) der gehaltenen Gruppe von Elektrodenplatten (20) nach unten platziert werden, und
bei dem Bandbildungsvorgang (S400) das Band (10) gebildet wird, indem die Fahnen (1) der Gruppe von Elektrodenplatten (20), die bei dem Schneidevorgang (S200) nach unten platziert wurden, in eine Schmelzflüssigkeit aus Blei oder einer Bleilegierung eingetaucht werden, die in eine Form (115) gefüllt ist, die nach oben geöffnet ist.

3. Verfahren nach Anspruch 1, bei dem
die Blei-Säure-Batterie mehrere der Gruppen von Elektrodenplatten (20) aufweist und
bei dem Schneidevorgang (S200) und dem Bandbildungsvorgang (S400) die mehreren der Gruppen Elektrodenplatten (20) mit Abständen angeordnet werden, so dass jede Gruppe von Elektrodenplatten (20) entsprechend gehalten wird.

4. Verfahren nach Anspruch 3, bei dem:
bei dem Schneidevorgang (S200) mehrere der Gruppen von Elektrodenplatten (20) mit der gleichen Polarität durch einen Schaftfräser (70) geschnitten werden.

5. Verfahren zum Herstellen einer Blei-Säure-Batterie, umfassend:
einen Verbindungsvorgang, der ein Durchführen des Verfahrens nach einem der Ansprüche 1 bis 4 umfasst;
einen Aufnahmevorgang zum entsprechenden Aufnehmen mehrerer der Gruppen von Elektrodenplatten (20), die in dem Verbindungsvorgang gebildet werden, in mehreren Zellen eines Behälters;
einen Verknüpfungsvorgang zum Verknüpfen der Bänder (10) der Gruppen von Elektrodenplatten (20), die in dem Unterbringungsvorgang aufgenommen werden;
einen Dichtungsvorgang zum Abdichten des Behälters mit einem Deckel nach dem Verknüpfungsvorgang; und
einen Flüssigkeitseinspritzvorgang zum Einspritzen eines Elektrolyten an einer höheren Position als die Höhe der Gruppe von Elektrodenplatten (20) in dem Behälter nach dem Dichtungsvorgang.

## Revendications

1. Procédé de fabrication d'une barrette (10) d'un groupe de plaques d'électrodes (20) d'une batterie au plomb-acide, comprenant :
un processus d'alignement (S100) permettant d'aligner le groupe de plaques d'électrodes (20) placées ;
**caractérisé par**
une opération de coupe (S200) permettant de maintenir le groupe de plaques d'électrodes (20) alignées par le processus d'alignement (S100), et de couper des extrémités distales des pattes (1) du groupe de plaques d'électrodes (20) ; et
un processus de formation de barrette (S400) permettant d'immerger, tout en maintenant le groupe d'électrodes (20) après l'opération de coupe (S200), les pattes (1) du groupe de plaques d'électrodes (20) dans un liquide de fusion de plomb ou d'alliage de plomb, formant ainsi une barrette (10), dans lequel les extrémités distales des pattes (1) du groupe maintenu de plaques d'électrodes (20) ayant la même polarité sont coupées pour être à la même hauteur,
dans lequel l'opération d'alignement (S100), l'opération de coupe (S200), et l'opération de formation de barrette (S400) sont réalisées par un dispositif COS (coulée sur barrette),
et le dispositif COS comporte au moins une première station (11) permettant de réaliser l'opération de coupe (S200) après l'opération d'alignement (S100) et une troisième station (13) permettant de réaliser l'opération de formation de barrette (S400).

2. Procédé selon la revendication 1, dans lequel dans l'opération de coupe (S200),
les extrémités distales de pattes (1) du groupe de plaques d'électrodes (20) sont coupées tandis que les pattes (1) du groupe maintenu de plaques d'électrodes (20) sont placées vers le bas, et
dans l'opération de formation de barrette (S400), la barrette (10) est formée par immersion des pattes (1) du groupe de plaques d'électrodes (20) qui ont été placées vers le bas dans l'opération de coupe (S200), dans un liquide de fusion de plomb ou d'alliage de plomb versé dans un moule (115) qui est ouvert vers le haut.

3. Procédé selon la revendication 1, dans lequel la batterie au plomb-acide comporte une pluralité des groupes de plaques d'électrodes (20), et
dans l'opération de coupe (S200) et l'opération de formation de barrette (S400), la pluralité des groupes de plaques d'électrodes (20) sont disposées avec des espaces de sorte que chaque groupe de plaques d'électrodes (20) soit maintenu respectivement.

4. Procédé selon la revendication 3, dans lequel :
dans l'opération de coupe (S200), une pluralité des groupes de plaques d'électrodes (20) ayant la même polarité sont coupés par une fraise en bout (70).

5. Procédé de fabrication d'une batterie au plomb-acide, comprenant :
une opération de liaison comprenant la réalisation du procédé selon l'une quelconque des revendications 1 à 4 ;
une opération de stockage permettant de stocker respectivement une pluralité des groupes de plaques d'électrodes (20) formés dans l'opération de liaison, dans une pluralité de cellules d'un contenant ;
une opération d'assemblage permettant d'assembler les barrettes (10) des groupes de plaques d'électrodes (20) stockés dans l'opération de stockage ;
une opération d'étanchéification permettant d'étanchéifier le contenant avec un couvercle, après l'opération d'assemblage ; et
une opération d'injection de liquide permettant d'injecter un électrolyte à une position plus haute que la hauteur du groupe de plaques d'électrodes (20) dans le contenant, après l'opération d'étanchéification.
